# FASCICULE DE BREVET EUROPEEN

(11) **EP 3 377 732 B1**
(45) Date de publication et mention de la délivrance du brevet: **19.05.2021**
(21) Numéro de dépôt: 16809490.2
(22) Date de dépôt: 14.11.2016
(51) Int. Cl.: F01D 25/16, F02K 3/06, F02C 7/36

(54) **PARTIE AVANT DE TURBOMACHINE D'AÉRONEF**
VORDERER TEIL EINER TURBOMASCHINE
FRONT PART OF A TURBOMACHINE

(30) Priorité: 16.11.2015 FR 1560973
(43) Date de publication de la demande: 26.09.2018
(73) Titulaire: Safran Aircraft Engines, 75015 Paris (FR)
(72) Inventeur: LEMARCHAND, Kevin, Morgane, 77550 Moissy-Cramayel (FR); BRAULT, Michel, Gilbert, Roland, 77550 Moissy-Cramayel (FR); MARTIN, Guillaume, Olivier, Vartan, 77550 Moissy-Cramayel (FR)
(74) Mandataire: Brevalex
(86) Numéro de dépôt international: PCT/FR2016/052942
(87) Numéro de publication internationale: WO 2017/085386

(56) Documents cités:
- EP-A1- 1 566 522
- US-A1- 2013 104 524

## Description

### DOMAINE TECHNIQUE

La présente invention se rapporte au domaine des turbomachines d'aéronef à double flux et à fort taux de dilution, dont la soufflante unique est entraînée par un réducteur. Ce type de turbomachine est dit « à soufflante lente », en raison de sa faible vitesse de rotation en comparaison d'une soufflante directement entraînée par le corps basse pression de la turbomachine.

Il s'agit de préférence d'un turboréacteur d'aéronef.

### ETAT DE LA TECHNIQUE ANTERIEURE

Sur certaines turbomachines à double flux, la soufflante unique est entraînée par un réducteur, agencé axialement entre un générateur de gaz et cette même soufflante. La mise en œuvre d'un réducteur autorise l'augmentation du diamètre de soufflante, et favorise donc l'obtention d'un taux de dilution plus élevé, générant un meilleur rendement.

Habituellement, le réducteur est placé sous le canal primaire de la turbomachine, également dénommé veine primaire. L'implantation du réducteur à cet emplacement particulier de la turbomachine a tout d'abord pour conséquence de contraindre la géométrie du canal primaire, ce qui peut entraîner un impact négatif sur l'écoulement du flux primaire à travers ce canal. En outre, puisque le réducteur est entouré par le canal primaire, ce dernier présente un diamètre intérieur imposé par la présence du réducteur. Ceci conduit à un dimensionnement du canal primaire qui n'est pas parfaitement optimisé. Le diamètre intérieur surdimensionné du canal primaire a par ailleurs des conséquences sur l'ensemble du dimensionnement de la turbomachine, puisque pour des raisons de performances aérodynamiques, les sections des canaux primaire et secondaire sont étroitement liées. De plus, la volonté d'obtenir un taux de dilution élevé, supérieur ou égal à 5, passe par la mise en œuvre d'une section de sortie importante pour le canal secondaire. Cette section de sortie importante du canal secondaire, combinée au fait que ce canal dispose d'un diamètre intérieur élevé dicté par le canal primaire surdimensionné, entraîne nécessairement un diamètre extérieur élevé pour le canal secondaire, qui nuit à l'encombrement radial et à la masse globale de la turbomachine.

De plus, pour bénéficier d'un compresseur basse pression présentant des performances satisfaisantes, celui-ci doit présenter un faible diamètre intérieur. Pour l'obtention de ce faible diamètre intérieur tout en respectant une pente pas trop élevée au sein du canal primaire, la présence du réducteur conduit à fortement éloigner le compresseur basse pression dans la direction axiale vers l'aval, ce qui nuit à l'encombrement du moteur dans cette même direction.

Pour réduire l'encombrement radial de la turbomachine, il est possible de réduire la dimension radiale du compartiment inter-veine séparant les deux canaux. Néanmoins, une telle réduction de dimension rend délicate l'implantation d'équipements dans le compartiment inter-veine. Ce dernier est d'ailleurs déjà encombré par la présence de flasques structuraux permettant la transmission des efforts provenant de la soufflante et du réducteur, en direction de l'enveloppe externe statorique de la turbomachine.

En outre, la position du réducteur au droit du canal primaire rend le chemin d'efforts assez complexe jusqu'à la structure de l'avion sur laquelle la turbomachine est rapportée, en particulier lorsque le réducteur est agencé en porte-à-faux. Cela conduit à ajouter des renforts structuraux qui pénalisent l'encombrement et la masse globale de la turbomachine.

Il existe donc un besoin d'optimisation des turbomachines à soufflante unique et à fort taux de dilution, de façon à aboutir à un compromis satisfaisant en termes d'encombrement, de masse globale, de performances et d'acoustique. EP1566522 A1 montre les caractéristiques techniques du préambule de la revendication indépendante 1.

### EXPOSÉ DE L'INVENTION

Pour répondre au moins partiellement à ce besoin, l'invention a pour objet une partie avant de turbomachine d'aéronef à double flux telle que présentée dans la revendication 1.

Globalement, l'invention contraste avec les conceptions classiques à soufflante unique par le fait que les aubes directrices de sortie et le réducteur sont déportés vers l'amont. Cela permet de bénéficier de nombreux avantages, parmi lesquels un chemin d'efforts plus direct et plus droit entre la soufflante et l'attache moteur. En effet, grâce à la mise en place des aubes directrices de sortie en amont du bec de séparation des flux, ces aubes structurales se rapprochent de la soufflante et peuvent être agencées sensiblement dans l'alignement du support de palier, même si un angle allant jusqu'à 30° est toléré entre ces deux éléments. Les efforts radiaux provenant de la soufflante transitent ainsi sainement et directement par le palier de roulement, le support de palier, les aubes directrices de sortie structurales, la virole extérieure et l'attache moteur. Grâce à ce chemin d'efforts direct, court et sensiblement droit, le réducteur raccordé au support de palier n'est pas ou que très peu impacté par les efforts provenant de la soufflante. Ce chemin d'efforts radiaux provenant de la soufflante contourne le réducteur, qui ne nécessite donc pas d'être renforcé pour résister à d'éventuelles contraintes parasites. Cet absence de renforcement est bénéfique en termes d'encombrement et de masse globale.

La conception selon l'invention permet également de réduire fortement, voire de supprimer intégralement le porte-à-faux du réducteur, dont les efforts qui en découlent peuvent transiter facilement par le support de palier, les aubes directrices de sortie structurales, puis par l'attache moteur dédiée à cet effet. En raison de ce chemin d'efforts plus direct, les besoins en renforts mécaniques sont fortement réduits, ce qui réduit l'encombrement radial et la masse globale de la turbomachine.

En outre, l'agencement du réducteur au moins pour moitié en amont du bec de séparation a pour conséquence avantageuse de moins contraindre la géométrie de ce canal primaire, et donc d'améliorer l'écoulement du flux primaire à travers ce canal. En particulier, la géométrie de chaque col de cygne présent dans ce canal primaire peut être ajustée de manière optimale, sans que cela n'ait d'impact négatif sur le dimensionnement des éléments environnants. Il en découle de meilleures performances aérodynamiques globales. A titre d'exemples indicatifs, la géométrie retenue pour le canal primaire peut ainsi librement dépendre de critères comme la charge aérodynamique, la vitesse d'écoulement en tête du compresseur, etc.

De plus, puisque le réducteur n'est plus entouré par le compresseur agencé au sein du canal primaire 16, le diamètre intérieur de ce compresseur est moins conditionné par le réducteur, voire plus du tout dépendant de celui-ci. Il devient ainsi possible de prévoir un faible diamètre intérieur pour le compresseur, sans avoir à déporter ce dernier axialement vers l'aval et tout en conservant un canal primaire avec une pente raisonnable. L'encombrement axial s'en trouve amélioré, tout comme les performances du compresseur.

Il est noté qu'en réduisant le diamètre intérieur du canal primaire et du compresseur, c'est l'ensemble du dimensionnement de la turbomachine qui peut être amélioré, tout en conservant la liberté d'adapter la section du canal secondaire à celle du canal primaire à des fins d'optimisation des performances aérodynamiques. Par rapport aux solutions de l'art antérieur, il est notamment possible d'atteindre un taux de dilution identique avec un encombrement global sensiblement réduit.

Ce gain d'encombrement peut être judicieusement mis à profit pour conserver un compartiment inter-veine avec des dimensions raisonnables pour l'implantation d'équipements. D'ailleurs, le déplacement de la structure au moins en partie en amont du bec de séparation, avec ses aubes directrices de sortie traversant l'intégralité du flux, a aussi pour avantage de pouvoir déplacer le réducteur vers l'amont. Dans cet agencement, la présence de flasques structuraux dans le compartiment inter-veine n'est plus requise, puisque la reprise des efforts s'effectue en amont du bec de séparation. En plus d'assurer une reprise plus saine des efforts du fait du rapprochement axial entre les aubes directrices de sortie structurales et le réducteur, cet agencement libère de l'espace dans le compartiment inter-veine pour l'implantation des équipements et pour la mise en œuvre de la fonction anti-feu.

En outre, le positionnement du réducteur au moins en partie en amont du bec de séparation lui permet d'être implanté dans une zone de volume important de la turbomachine. Le réducteur peut ainsi présenter une dimension radiale élevée sans contraindre son environnement, ce dimensionnement radial étant directement dépendant du rapport de réduction souhaité. Avec la présente invention, le réducteur est alors avantageusement agencé dans une zone où il peut présenter un fort rapport de réduction, par exemple supérieur à deux.

Avec ce positionnement particulier du réducteur, celui-ci se trouve donc au plus près des aubes directrices de sortie structurales, qui sont quant à elles implantées dans le flux total, en amont du bec de séparation. Cela contraste avec les solutions de l'art antérieur dans lesquelles ces aubes directrices de sortie étaient implantées dans le flux secondaire, en aval et à proximité du bec de séparation. En raison du dégivrage du bec, ces aubes devaient être renforcées pour résister aux contraintes thermiques. Dans l'invention, ces contraintes n'existent plus sur les aubes directrices de sortie, qui peuvent ainsi être allégées. Egalement, puisque ces aubes sont situées en amont du bec dans le flux total, il n'est plus nécessaire d'implanter un redresseur dans le canal primaire en amont du compresseur, ce qui réduit encore davantage la masse globale.

Enfin, en tête d'aubes de soufflante, la longueur axiale minimale requise entre la soufflante et les aubes directrices de sortie, en termes de contrainte acoustique, peut conduire à incliner ces aubes de sorte que leur tête soit située plus en aval que leur pied. Cette inclinaison s'avère non seulement avantageuse pour la gestion des interactions acoustiques entre la soufflante et les aubes directrices de sortie, mais elle facilite simultanément le sensible alignement entre ces aubes et le support de palier, garant de l'obtention du chemin direct d'efforts radiaux en provenance de la soufflante.

L'invention présente par ailleurs au moins l'une des caractéristiques optionnelles suivantes, prises isolément ou en combinaison.

Pour renforcer encore tout ou partie des avantages précités, ledit réducteur se situe en intégralité en amont du bec de séparation, et/ou ledit angle A est inférieur à 20°.

De préférence, ladite attache moteur est configurée pour assurer la reprise des efforts verticaux, et de préférence également des efforts transversaux.

Le réducteur comporte un train d'engrenages. Ce train d'engrenages est préférentiellement soit épicycloïdal, soit planétaire. Il est noté que conventionnellement, le train est dit épicycloïdal lorsque la couronne est fixe en rotation, tandis qu'il est dit planétaire lorsque le porte-satellites est fixe en rotation.

Le réducteur comporte une couronne, de préférence fixée sur le support de palier.

De préférence, le réducteur comporte un porte-satellites solidaire en rotation avec ledit moyeu de soufflante et se trouvant dans le prolongement axial de celui-ci, ladite partie avant de turbomachine comprenant un palier de roulement de reprise des efforts axiaux de la soufflante, ledit palier de roulement étant supporté par un support additionnel de palier se rapportant sur ledit support de palier.

La partie avant de turbomachine comporte un arbre, et ladite structure porte intérieurement au moins un élément structural statorique reliant cette structure à un élément de support de palier de roulement guidant ledit arbre.

De préférence, ledit réducteur est agencé axialement entre lesdits paliers de roulement guidant ladite soufflante, et ledit palier de roulement guidant ledit arbre.

Ladite structure comporte une virole interne sur laquelle sont fixés les pieds des aubes directrices de sortie structurales, ladite virole interne masquant au moins en partie une entrée du canal primaire, selon une direction longitudinale de la turbomachine.

L'invention a également pour objet une turbomachine d'aéronef à double flux, comprenant une partie avant telle que décrite ci-dessus. De préférence, il s'agit d'un turboréacteur à soufflante unique.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un turboréacteur selon l'invention ; et
- la figure 2 représente une vue agrandie, plus détaillée, d'une partie avant du turboréacteur montré sur la figure précédente, selon un mode de réalisation préféré de l'invention
- la figure 3 est une vue de la partie avant du turboréacteur, sur laquelle ont été identifiés différents paramètres géométriques ; et
- la figure 4 correspond à une vue en coupe prise le long de la ligne IV-IV de la figure 3.

### EXPOSÉ DÉTAILLÉ DE MODES DE RÉALISATION PRÉFÉRÉS

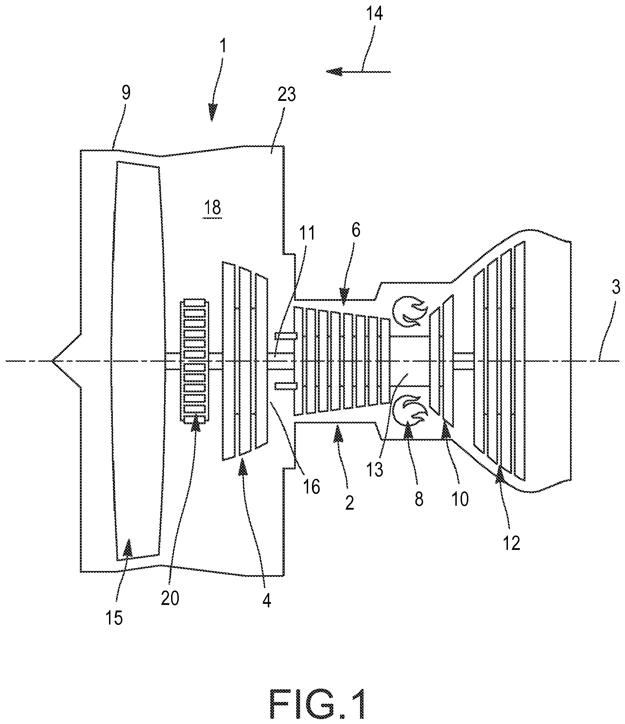

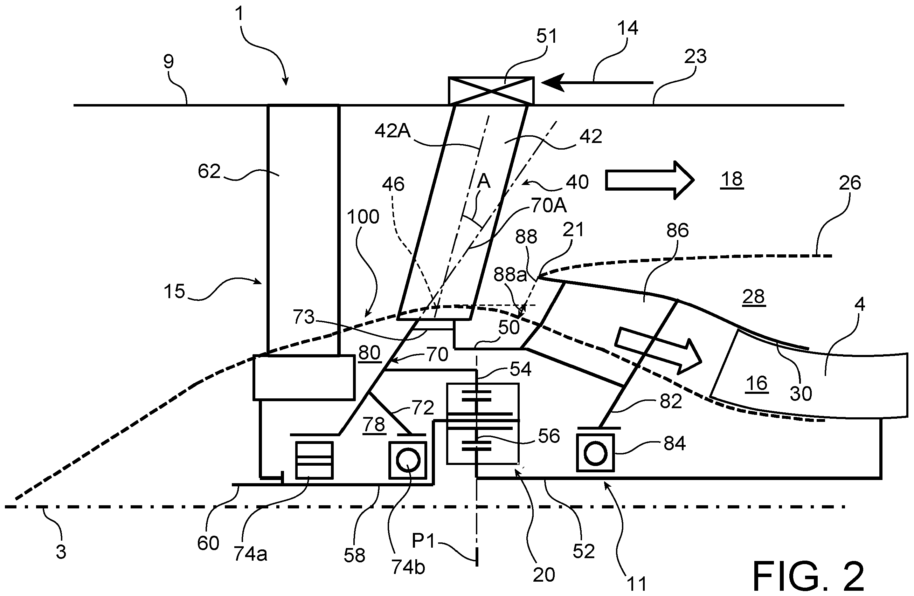

En référence aux figures 1 et 2, il est représenté un turboréacteur 1 à double flux et à double corps, présentant un taux de dilution élevé. Ce taux de dilution, également dénommé BPR (de l'anglais « By-Pass Ratio »), est supérieur ou égal à 5 et de préférence compris entre 5 et 50. Ce taux de dilution correspond au sens conventionnel du terme, tel qu'il est notamment défini en anglais par l'EASA (de l'anglais « European Aviation Safety Agency »), à savoir : *« The ratio of the air mass flow through the by-pass ducts of a gas turbine engine to the air mass flow through the engine core, calculated at maximum thrust when the engine is stationary in an international standard atmosphere at sea lever", pouvant être traduit de la façon suivante : « le rapport du débit de masse d'air à travers les conduits de dérivation d'un moteur à turbine à gaz, sur le débit de masse d'air à travers le coeur du moteur, calculé à la poussée maximale lorsque le moteur est stationnaire dans une atmosphère standard internationale au niveau de la mer ».*

Il est également prévu un fort rapport de moyeux, compris entre 0,15 et 0,4. Ce rapport de moyeux correspond également au sens conventionnel, c'est-à-dire qu'il est défini par le rapport entre le diamètre du moyeu au bord d'attaque des aubes de soufflante, et le diamètre de la soufflante au bord d'attaque.

Le turboréacteur 1 comporte de façon classique un générateur de gaz 2 de part et d'autre duquel sont agencés un compresseur basse pression 4 et une turbine basse pression 12, ce générateur de gaz 2 comprenant un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 de celle-ci. En revanche, les termes « amont » et « aval » sont considérés selon la direction d'écoulement principale des gaz au sein du turboréacteur.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11.

Le turboréacteur 1 comporte par ailleurs, à l'avant du générateur de gaz 2 et du compresseur basse pression 4, une soufflante 15 unique. Par soufflante unique, il est entendu une seule rangée annulaire d'aubes de soufflante, tournant toutes dans le même sens en étant rattachées à un même moyeu de soufflante. Ce turboréacteur à soufflante unique contraste donc fortement avec les turbomachines à doublet de soufflantes contrarotatives (dites à « contrafan »), dont le fonctionnement et la conception diffèrent très largement.

La soufflante unique 15 est rotative selon l'axe 3, et entourée d'un carter de soufflante 9. Elle n'est pas entraînée directement par l'arbre basse pression 11, mais seulement entraînée indirectement par cet arbre, ce qui lui permet de tourner avec une vitesse plus lente. En effet, un réducteur 20 est agencé entre le corps basse pression et la soufflante 15, en étant disposé axialement entre cette dernière et le compresseur basse pression 4. La présence du réducteur 20 pour entraîner la soufflante 15 permet de prévoir un plus grand diamètre de soufflante, et favorise donc l'obtention d'un plus fort taux de dilution, assurant un gain de consommation en carburant. Le rapport de réduction fourni par le réducteur 20 est de préférence supérieur à 1,5, et encore plus préférentiellement supérieur à 2.

En outre, le turboréacteur 1 définit un canal primaire 16 destiné à être traversé par un flux primaire, ainsi qu'un canal secondaire 18 destiné à être traversé par un flux secondaire situé radialement vers l'extérieur par rapport au flux primaire. Comme cela est connu de l'homme du métier, le canal secondaire 18 est délimité radialement vers l'extérieur par une virole extérieure 23, préférentiellement métallique, prolongeant vers l'arrière le carter de soufflante 9.

De plus, le canal secondaire 18 est délimité radialement vers l'intérieur par une surface de délimitation interne 26 servant également de délimitation externe à un compartiment inter-veine 28, visible sur la figure 2. Ce compartiment inter-veine 28 est également délimité vers l'avant par un bec de séparation des flux 21, et radialement vers l'intérieur par une virole 30 renfermant le compresseur basse pression 4 mentionné ci-dessus.

Bien que cela n'ait pas été représenté, le turboréacteur 1 est équipé d'un ensemble d'équipements, par exemple du type pompe à carburant, pompe hydraulique, alternateur, démarreur, actionneur stator à calage variable (VSV), actionneur de vanne de décharge, ou encore générateur électrique de puissance. Il s'agit notamment d'un équipement pour la lubrification du réducteur 20.

En référence plus spécifiquement à la figure 2, le réducteur 20 comprend un train épicycloïdal, qui comporte tout d'abord un planétaire 52 centré sur l'axe 3 et solidaire en rotation de l'arbre basse pression 11, en étant agencé dans le prolongement axial avant de cet arbre 11. Les deux éléments 11, 52 peuvent être réalisés d'une seule pièce, ou bien préférentiellement rapportés fixement l'un sur l'autre. Le train d'engrenages comporte par ailleurs une couronne extérieure 54, solidaire d'un stator du turboréacteur. Il est également prévu des satellites 56, engrenant avec la couronne extérieure 54 et le planétaire 52. Enfin, le train épicycloïdal comporte un porte-satellites 58 solidaire en rotation avec un moyeu de soufflante 60 portant les aubes de soufflante 62. Le porte-satellites 58 se trouve dans le prolongement axial du moyeu 60. Ici aussi, les deux éléments 58, 60 peuvent être réalisés d'une seule pièce, ou bien préférentiellement rapportés fixement l'un sur l'autre. Dans une autre configuration possible non représentée, dite à train planétaire, le porte-satellites 58 est solidaire du stator du turboréacteur, et la couronne extérieure 54 est solidaire en rotation avec le moyeu de soufflante 60.

Toujours en référence à la figure 2, il est montré un assemblage 100 faisant partie intégrante du turboréacteur 1. L'assemblage 100 comporte tout d'abord un support de palier de roulement 70 faisant partie du stator du turboréacteur 1.

Le support de palier 70 prend la forme d'un flasque centré sur l'axe 3 et s'ouvrant vers l'aval. Il supporte un palier de roulement 74a coopérant avec le moyeu de soufflante 60. Le palier 74a est le palier le plus avant de la turbomachine. Il est conçu pour reprendre des efforts radiaux de la soufflante, avec de préférence une conception dite à rouleaux.

En outre, il est prévu plus en aval un autre palier de roulement 74b, coopérant avec le moyeu 60 ou le porte-satellites 58 situé dans son prolongement. Le palier 74b est conçu pour reprendre des efforts axiaux de la soufflante, avec de préférence une conception dite à billes. Il est supporté par un support additionnel de palier 71, se rapportant fixement sur le support 70 précédemment cité. Le support additionnel 71 prend également la forme d'un flasque, de plus petite dimension et s'ouvrant vers l'avant. Il se raccorde sur le support 70 plus près de l'axe 3 que la couronne 54, qui elle aussi se raccorde fixement directement sur le support de palier 70.

Les deux paliers 74a, 74b guident un ensemble rotatif destiné à être entraîné par le générateur de gaz 2, cet ensemble comprenant donc le porte-satellites 58 du réducteur et le moyeu 60 de la soufflante.

Le support de palier 70 et le support additionnel 71 sont centrés sur l'axe 3. Ils délimitent ensemble un espace radialement intérieur 78 dans lequel sont placés les paliers 74a, 74b, et forment en partie une enceinte de lubrification. Les supports 70, 71 sont réalisés à l'aide d'une pièce d'un seul tenant, ou de plusieurs pièces fixées les unes aux autres. Ils forment un V en demi-section axiale, le V étant ouvert radialement vers l'intérieur et définissant un angle d'inclinaison d'environ 90° entre les deux portions.

L'assemblage 100 comporte par ailleurs une structure 40 à éléments radiaux, comprenant des aubes directrices de sortie 42 (ou OGV de l'anglais « Outlet Guide Vanes »). Ces aubes 42, outre le fait qu'elles présentent un profil aérodynamique pour redresser le flux d'air s'échappant de la soufflante unique 15, présentent également pour au moins certaines d'entre elles un caractère structural de transmission d'efforts. De préférence, ce sont toutes ces aubes 42 qui sont structurales, en ce sens qu'elles permettent notamment la transmission des efforts en provenance de la soufflante 15 et du réducteur 20, et en direction d'une attache moteur 51 fixée sur la virole extérieure 23, au droit de ces aubes 42.

Les aubes 42 sont réparties régulièrement autour de l'axe 3, et relient la virole extérieure 23 faisant partie intégrante de la structure 40, à une virole interne 46 de cette structure, située en amont du bec de séparation 21. Plus précisément, la tête des aubes 42 est fixée à la virole extérieure 23, tandis que le pied de ces aubes est fixé à la virole interne 46.

Aussi, l'une des particularités de l'invention réside dans le fait d'agencer les aubes directrices de sortie 42 en amont du bec de séparation. De ce fait, le canal secondaire 18 est ainsi dépourvu de tout élément radial de jonction entre les éléments 23, 26, en amont de la chambre de combustion. Ainsi, ces aubes directrices de sortie structurales 42 cheminent radialement à travers l'intégralité du flux, à l'avant du bec 21, sans traverser ce bec.

Ces aubes 42 peuvent présenter une inclinaison vers l'aval en allant radialement vers l'extérieur, sans pour autant nécessairement amener leurs têtes en aval de ce bec de séparation des flux 21. L'angle d'inclinaison des aubes 42 peut être prévu entre 30 et 60° par rapport à la direction axiale. A cet égard, il est indiqué qu'en demi-section axiale passant par l'une des aubes 42, telle que la demi-section de la figure 2, l'aube 42 s'étend donc selon une première direction 42A inclinée de la valeur indiquée ci-dessus. Toujours dans cette demi-section, le support de palier 70 s'étend quant à lui selon une seconde direction 70A inclinée entre 30 et 60° par rapport à la direction axiale, et de préférence de l'ordre de 45°. Cela confère un chemin d'efforts très direct et sensiblement droit entre le support de palier 70 et les aubes 42 aux pieds desquelles est fixé ce support 70, puisque l'angle A entre les première et seconde directions 42A, 70A est inférieur à 30°, voire inférieur à 20°.

Ainsi, les efforts radiaux provenant du moyeu de soufflante 60 transitent de façon sensiblement droite et directe par le palier 74a, le support 70 dont les extrémités radiales extérieures sont fixées sur le pied des aubes directrices de sortie 42, par ces mêmes aubes 42, puis par la virole extérieure 23 et l'attache moteur 51.

Cela permet en particulier de contourner le réducteur 20, et de ne pas contraindre ce dernier avec les efforts radiaux importants provenant de la soufflante.

Il est par ailleurs de préférence prévu un recouvrement axial, au moins partiel, d'une part entre le pied des aubes 42 et la couronne 54 du réducteur 20, et d'autre part entre le pied des aubes 42 et le palier de roulement aval 74b guidant le moyeu de soufflante 60 et le porte-satellites 58. Pour l'obtention d'un chemin d'efforts très sain, l'attache moteur 51, les aubes directrices de sortie structurales 42 et le réducteur 20 sont traversés par un même plan fictif de la turbomachine. En provenance du réducteur 20, les efforts peuvent ainsi transiter par la couronne 54, le flasque 70, les aubes 42, la virole extérieure 23, puis l'attache moteur 51 représentée uniquement schématiquement sur la figure 2. Cette attache moteur 51 est destinée à assurer la fixation du moteur sur un élément de structure de l'aéronef, de préférence en étant raccordée à un mât d'accrochage, par exemple situé sous l'aile de l'aéronef. Comme indiqué précédemment, l'attache moteur 51 est fixée sur la virole extérieure 23 au droit des aubes 42, et elle est préférentiellement configurée pour assurer la reprise des efforts verticaux et transversaux. La reprise des efforts selon la direction axiale s'effectue de manière classique par des bielles latérales de reprise de poussée, qui se raccordent sur une partie plus aval de la turbomachine.

De manière analogue à celle présentée pour le support de palier 70, la structure 40 porte intérieurement, depuis sa virole interne 46 et/ou le pied de ses aubes 42, un élément structural statorique 50 en forme de flasque reliant cette structure 40 à un élément de support 82 d'un palier de roulement 84, guidant l'arbre basse pression 11. Le support de palier 82 est par ailleurs monté sur les bras 86 d'un carter d'entrée, ces bras traversant le canal primaire 16 en amont du compresseur basse pression 4.

Les bras 86 sont ainsi agencés axialement entre le support de palier 82 et l'élément structural statorique 50, ce dernier faisant saillie intérieurement sous les aubes 42 tout comme le support de palier 70 auquel il est relié par une pièce structurale de liaison 73, cheminant axialement entre la virole interne 46 et la couronne 54.

Avec cette conception, les efforts axiaux provenant de la soufflante transitent successivement par le palier de roulement à billes 74b, le support additionnel 71, le support 70, la pièce structurale de liaison 73, l'élément structural statorique 50 et les bras 86, avant de cheminer vers l'aval vers d'autres attaches moteur.

Les bras du carter d'entrée 86 sont agencés juste en aval d'une entrée 88 du canal primaire 16, située au niveau du bec de séparation des flux 21. Comme cela a été schématisé sur la figure 2, dans la direction de l'axe 3, la partie radialement intérieure 88a de cette entrée 88 est masquée par la virole interne 46 de plus grand diamètre. Cela permet avantageusement la protection du flux primaire contre les agressions externes comme l'ingestion de corps étrangers. Le caractère masqué de l'entrée 88 du canal primaire 16 est rendu possible en particulier par un faible dimensionnement radial de ce canal 16. Un tel dimensionnement réduit peut être appliqué grâce à une particularité spécifique à l'invention, visant à placer le réducteur 20 en partie en amont du bec de séparation. Aussi, le diamètre intérieur du canal primaire 16 n'est pas ou peu contraint par la présence du réducteur, agencé axialement entre les paliers de roulement 74a, 74b guidant la soufflante unique 15, et le palier de roulement 84 guidant l'arbre basse pression 11.

En procédant de la sorte, la géométrie et le dimensionnement des canaux 16, 18 et du compresseur basse pression 4 restent plus libres, ce qui conduit à réduire le dimensionnement global de la turbomachine et à en optimiser les performances aérodynamiques.

Plus précisément, le réducteur 20 est agencé en intégralité en amont du compresseur basse pression 4, et présente un plan transversal médian P1 situé en amont du bec de séparation des flux 21. En d'autres termes, il est situé au moins pour moitié en amont du bec, même si c'est de préférence l'intégralité de ce réducteur qui est agencée en amont du bec 21. Cela lui permet de disposer d'une dimension radiale élevée, propice à l'obtention du fort rapport de réduction souhaité.

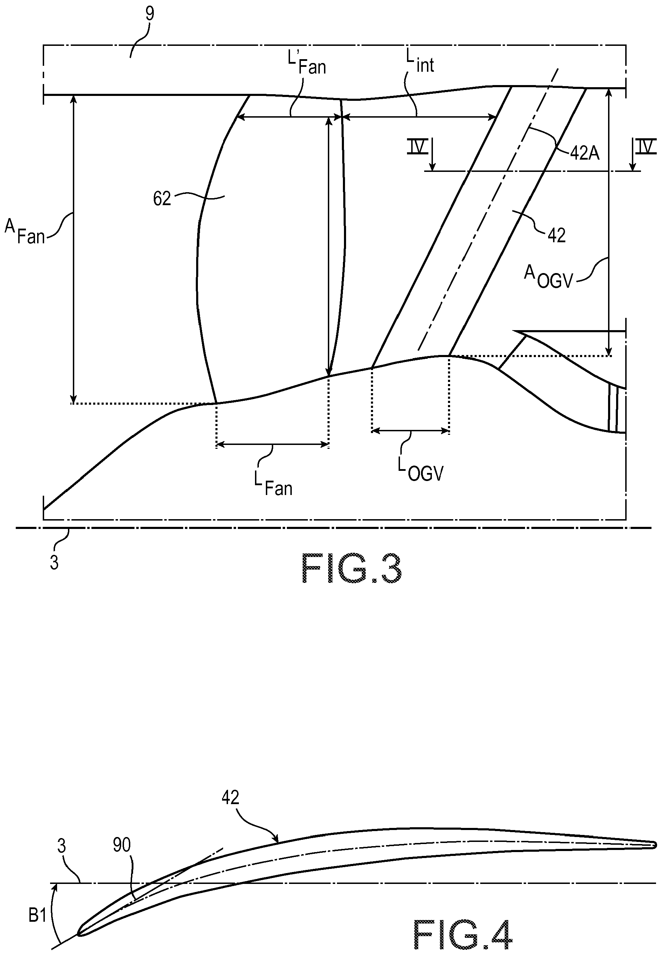

En référence aux figures 3 et 4, il est montré différents paramètres géométriques concernant les aubes directrices de sortie structurales 42, permettant à celles-ci de procurer des performances aérodynamiques élevées en aval des aubes de soufflante 62. Sur la figure 3, il est montré que la section de passage à la sortie des aubes directrices de sortie 42, référencée A_{OGV}, correspond à au moins 65% de la section de passage à l'entrée des aubes de soufflante 62, référencée A_{Fan} sur la figure 3.

De plus, la longueur axiale du pied de chaque aube directrice 42, référencée L_{OGV} sur la figure 3, correspond à au moins 60% de de la longueur axiale L_{Fan} du pied de chaque aube de soufflante 62.

Comme cela a été évoqué précédemment, chaque aube 42 présente un vrillage pour le redressement du flux sortant de la soufflante. Ce Vrillage est notamment caractérisé par un angle B1 au bord d'attaque supérieur à 20° par rapport à l'axe longitudinal 3, au moins sur l'une de ses coupes telle que celle montrée sur la figure 4. En effet, cet angle permet de récupérer l'écoulement en giration issu du bord de fuite des aubes de soufflante. Ici, l'angle au bord d'attaque B1 est mesuré entre la ligne squelette 90 du profil au bord d'attaque (définie de façon conventionnelle comme la ligne équidistante de l'intrados et de l'extrados de l'aube 42), et l'axe 3. De plus, le bord de fuite est préférentiellement orienté dans la direction de l'axe 3, comme cela est visible sur la figure 4.

Enfin, pour limiter les interactions acoustiques entre la soufflante 15 et les aubes directrices de sortie structurales 42, en demi-section axiale telle que celle de la figure 3, et à un niveau de la soufflante correspondant à 90% de la hauteur du bord de fuite des aubes de soufflante en partant de leur pied, la longueur axiale Lᵢₙₜ séparant le bord de fuite des aubes de soufflante 62 et le bord d'attaque des aubes directrices de sortie 42, est au moins 1,5 fois supérieure à la longueur axiale L'_{fan} des aubes de soufflante. Le rapport entre ces longueurs est encore plus préférentiellement supérieur à 2, et ce sur les 10% de hauteur restant sur les aubes, ce qui correspond aux 10% extérieurs de la veine totale. Pour ce faire et en raison de la proximité entre les pieds des aubes 42, 62, les aubes directrices 42 sont inclinées vers l'arrière en allant radialement vers l'extérieur, avec la première direction 42A présentant la valeur d'inclinaison précitée.

Bien entendu, diverses modifications peuvent être apportées par l'homme du métier à l'invention qui vient d'être décrite, uniquement à titre d'exemples non limitatifs.

## Revendications

1. Partie avant de turbomachine (1) d'aéronef à double flux la partie avant comprenant une soufflante entourée d'un carter de soufflante (9), un générateur de gaz (2) agencé en aval de la soufflante (15) et comprenant un compresseur (4), un réducteur (20) interposé entre le générateur de gaz (2) et la soufflante (15), un bec de séparation de flux (21) séparant un canal primaire (16) et un canal secondaire (18) de la turbomachine, ainsi qu'une structure (40) agencée en aval de la soufflante (15) et comprenant des aubes directrices de sortie (42) ainsi qu'une virole extérieure (23) sur laquelle est fixée la tête de chaque aubes directrices de sortie (42), ladite virole extérieure (23) prolongeant vers l'aval ledit carter de soufflante (9), la soufflante comprenant un moyeu de soufflante (60) guidé par un palier de roulement (74a) de reprise des efforts radiaux de la soufflante, ledit palier de roulement (74a) étant supporté par un support de palier (70),
les aubes directrices de sortie (42) présentant pour au moins certaines d'entre elles un caractère structural de transmission d'efforts, notamment pour la transmission d'efforts en provenance du palier de roulement (74a) et du réducteur (20), et en direction d'une attache moteur (51) destinée à assurer la fixation de la turbomachine sur un élément de structure de l'aéronef, ladite attache moteur (51) étant fixée sur ladite virole extérieure (23) au droit des aubes directrices de sortie structurales (42),
en ce qu'en demi-section axiale de la partie avant de turbomachine passant par l'une des aubes directrices de sortie (42), cette aube s'étendant selon une première direction formant un angle (A) inférieur à 30° avec une seconde direction selon laquelle s'étend ledit support de palier (70), dont l'extrémité radiale extérieure est fixée sur le pied des aubes directrices de sortie (42), le pied étant agencé en amont du bec de séparation des flux (21),
en ce que ledit réducteur (20), relié au support de palier (70) et agencé en intégralité en amont du compresseur (4), présentant un plan transversal médian (P1) situé en amont dudit bec de séparation des flux (21),
et en ce qu'en demi-section axiale de la partie avant de turbomachine, à un niveau de la soufflante correspondant à 90% de la hauteur du bord de fuite des aubes de soufflante (62) en partant de leur pied, la longueur axiale (Lᵢₙₜ) séparant le bord de fuite des aubes de soufflante (62) et le bord d'attaque des aubes directrices de sortie (42), étant au moins 1,5 fois supérieure à la longueur axiale (L'_{fan}) des aubes de soufflante, **caractérisée en ce que** la soufflante est une soufflante unique et la partie avant de turbomachine présente un taux de dilution supérieur ou égal à 5.

2. Partie avant de turbomachine selon la revendication 1, **caractérisée en ce que** ledit réducteur (20) se situe en intégralité en amont du bec de séparation (21).

3. Partie avant de turbomachine selon la revendication 1 ou la revendication 2, **caractérisée en ce que** ledit angle (A) est inférieur à 20°.

4. Partie avant de turbomachine selon l'une quelconque des revendications précédentes, **caractérisée en ce que** ladite attache moteur (51) est configurée pour assurer la reprise des efforts verticaux, et de préférence également des efforts transversaux.

5. Partie avant de turbomachine d'aéronef selon l'une quelconque des revendications précédentes, **caractérisée en ce que** le réducteur (20) comporte un train d'engrenages, de préférence épicycloïdal ou planétaire.

6. Partie avant de turbomachine d'aéronef selon la revendication précédente, **caractérisée en ce que** le réducteur (20) comporte une couronne (54), fixée sur le support de palier (70).

7. Partie avant de turbomachine d'aéronef selon la revendication 5 ou la revendication 6, **caractérisée en ce que** le réducteur (20) comporte un porte-satellites (58) solidaire en rotation avec ledit moyeu de soufflante (60) et se trouvant dans le prolongement axial de celui-ci, ladite partie avant de turbomachine comprenant un palier de roulement (74b) de reprise des efforts axiaux de la soufflante, ledit palier de roulement (74b) étant supporté par un support additionnel de palier (71) se rapportant sur le support de palier (70).

8. Partie avant de turbomachine d'aéronef selon l'une quelconque des revendications précédentes, **caractérisée en ce qu'**elle comporte un arbre (11), et **en ce que** ladite structure (40) porte intérieurement au moins un élément structural statorique (50) reliant cette structure (40) à un élément (82) de support de palier de roulement (84) guidant ledit arbre (11).

9. Partie avant de turbomachine d'aéronef selon les revendications 7 et 8 combinées, **caractérisée en ce que** ledit réducteur (20) est agencé axialement entre lesdits paliers de roulement (74a, 74b) guidant ladite soufflante (15), et ledit palier de roulement (84) guidant ledit arbre (11).

10. Turbomachine (1) d'aéronef à double flux, comprenant une partie avant selon l'une quelconque des revendications précédentes, la turbomachine étant préférentiellement un turboréacteur (1) à soufflante unique (15).

## Patentansprüche

1. Vorderer Teil einer Zweistrom-Turbomaschine (1) eines Luftfahrzeugs, wobei der vordere Teil einen Fan, der von einem Fan-Gehäuse (9) umgeben ist, einen stromabwärts von dem Fan (15) angeordneten Gasgenerator (2), der einen Verdichter (4) umfasst, ein zwischen dem Gasgenerator (2) und dem Fan (15) angeordnetes Untersetzungsgetriebe (20), eine Spitze zur Aufteilung des Stroms (21), die einen Primärkanal (16) und einen Sekundärkanal (18) der Turbomaschine voneinander trennt, sowie einen stromabwärts des Fans (15) angeordneten Aufbau (40) umfasst, der Austrittsleitschaufeln (42) und einen Außenring (23), an dem der Kopf der einzelnen Austrittsleitschaufeln (42) angebracht ist, umfasst, wobei der genannte Außenring (23) das genannte Fan-Gehäuse (9) in Stromabwärtsrichtung verlängert, wobei der Fan eine in einem Wälzlager (74a) zur Aufnahme der Radialkräfte des Fans geführte Fan-Nabe (60) umfasst, wobei das genannte Wälzlager (74a) auf einem Lagerträger (70) aufliegt,
wobei die Austrittsleitschaufeln (42) zumindest teilweise einen Aufbau für die Übertragung von Kräften aufweisen, insbesondere für die Übertragung von dem Wälzlager (74a) und dem Untersetzungsgetriebe (20) kommenden Kräften sowie in Richtung einer Triebwerksaufhängung (51), die für die Befestigung der Turbomaschine an einem Bauelement des Luftfahrzeugs vorgesehen ist, wirkenden Kräften, wobei die genannte Triebwerksaufhängung (51) auf Höhe der Austrittsleitschaufeln (42) an dem genannten Außenring (23) befestigt ist,
wobei im axialen Halbschnitt des vorderen Teils der Turbomaschine durch eine der Austrittsleitschaufeln (42) diese Schaufel in eine erste Richtung verläuft und dabei einen Winkel (A) kleiner 30° zu einer zweiten Richtung bildet, in der der genannte Lagerträger (70) verläuft, dessen äußeres radiales Ende am Fuß der Austrittsleitschaufeln (42) angebracht ist, wobei der Fuß stromaufwärts der Spitze zur Aufteilung des Stroms (21) angeordnet ist,
wobei das genannte Untersetzungsgetriebe (20), das mit dem Lagerträger (70) gekoppelt und vollständig stromaufwärts des Verdichters (4) angeordnet ist, eine stromaufwärts der Spitze zur Aufteilung des Stroms (21) angeordnete Quermittelebene (P1) aufweist,
und wobei im axialen Halbschnitt des vorderen Teils der Turbomaschine auf einer Höhe des Fans entsprechend 90 % der Höhe der Hinterkante der Fan-Schaufeln (62) ausgehend von deren Fuß die axiale Länge (Lint), die die Hinterkante der Fan-Schaufeln (62) und die Vorderkante der Austrittleitschaufeln (42) trennt, mindestens 1,5-mal größer ist als die axiale Länge (L'_{fan}) der Schaufeln des Fans, wobei der Fan ein einzelner Fan ist und der vordere Teil der Turbomaschine ein Nebenstromverhältnis größer oder gleich 5 aufweist.

2. Vorderer Teil einer Turbomaschine gemäß Anspruch 1, **dadurch gekennzeichnet, dass** das genannte Untersetzungsgetriebe (20) vollständig stromaufwärts der Aufteilungsspitze (21) angeordnet ist.

3. Vorderer Teil einer Turbomaschine gemäß Anspruch 1 oder Anspruch 2, **dadurch gekennzeichnet, dass** der genannte Winkel (A) kleiner als 20° ist.

4. Vorderer Teil einer Turbomaschine gemäß einem der vorstehenden Ansprüche, **dadurch gekennzeichnet, dass** die genannte Triebwerksaufhängung (51) für die Aufnahme der vertikalen Kräfte sowie vorzugsweise auch der Querkräfte konfiguriert ist.

5. Vorderer Teil einer Turbomaschine eines Luftfahrzeugs gemäß einem der vorstehenden Ansprüche, **dadurch gekennzeichnet, dass** das Untersetzungsgetriebe (20) einen Getriebezug beinhaltet, und zwar vorzugsweise einen Umlauf- oder Planetengetriebezug.

6. Vorderer Teil einer Turbomaschine eines Luftfahrzeugs gemäß dem vorstehenden Anspruch, **dadurch gekennzeichnet, dass** das Untersetzungsgetriebe (20) eine Krone (54) beinhaltet, die an dem Lagerträger (70) angebracht ist.

7. Vorderer Teil einer Turbomaschine eines Luftfahrzeugs gemäß Anspruch 5 oder Anspruch 6, **dadurch gekennzeichnet, dass** das Untersetzungsgetriebe (20) einen drehfest mit der genannten Fan-Nabe (60) verbundenen Planetenträger (58) beinhaltet, der sich in der axialen Verlängerung von dieser befindet, wobei der genannte vordere Teil einer Turbomaschine ein Wälzlager (74b) zur Aufnahme der Axialkräfte des Fans beinhaltet, wobei dieses Wälzlager (74b) auf einem zusätzlichen Lagerträger (71) aufliegt, der an dem Lagerträger (70) befestigt ist.

8. Vorderer Teil einer Turbomaschine eines Luftfahrzeugs gemäß einem der vorstehenden Ansprüche, **dadurch gekennzeichnet, dass** er eine Welle (11) umfasst und der genannte Aufbau (40) im Inneren mit mindestens einem Stator-Bauelement (50) versehen ist, das diesen Aufbau (40) mit einem Element (82) zur Stützung des Wälzlagers (84), in dem die genannte Welle (11) geführt wird, verbindet.

9. Vorderer Teil einer Turbomaschine eines Luftfahrzeugs gemäß den Ansprüchen 7 und 8, wobei das genannte Untersetzungsgetriebe (20) axial zwischen den genannten Wälzlagern (74a, 74b), in denen der genannte Fan (15) geführt wird, und dem genannten Wälzlager (84), in dem die genannte Welle (11) geführt wird, angeordnet ist.

10. Zweistrom-Turbomaschine (1) eines Luftfahrzeugs, die einen vorderen Teil gemäß einem der vorstehenden Ansprüche umfasst, wobei die Turbomaschine vorzugsweise ein Turbinenstrahltriebwerk (1) mit einem einzelnen Fan (15) ist.

## Claims

1. A front section of a turbomachine (1) for a turbofan aircraft, the front portion comprising a fan surrounded by a fan casing (9), a generator gas (2) arranged downstream of the fan (15) and comprising a low pressure compressor (4), a gear box (20) interposed between the gas generator (2) and the fan (15), a spout separation stream (21) between a primary channel (16) and a secondary channel (18) of the turbomachine, and a structure (40) arranged downstream of the fan (15) and comprising outlet guide vanes (42) and an outer shroud (23) on which is fixed the head of each of the outlet guide vanes (42), said outer shroud (23) extending downstream of said fan housing (9), the fan comprising a fan hub (60) guided by a rolling bearing (74a) of recovery of radial forces from the fan, said rolling bearing (74a) being supported by a bearing support member (70),
at least some of the outlet guide vanes (42) having a structural character of force transmission, in particular for the transmission of forces from the rolling bearing (74a) and gear box (20) and toward an engine mount (51) intended to ensure fixing of the turbomachine to a structural element of the aircraft, said engine mount (51) being secured to said outer shroud (23) to the right structural outlet guide vanes (42),
in that in axial half-section of the turbomachine front portion passing through one of outlet guide vanes (42), this blade extending along a first direction forming an angle (A) of less than 30° with a second direction that extends said bearing support member (70) whose outer radial end is attached to the root of the outlet guide vanes (42), the root being arranged upstream of the flow separation nozzle (21),
in that said gear box (20) connected to the bearing support member (70) and arranged in its entirety upstream of the low pressure compressor (4), having a central transverse plane (P1) located upstream of said flow separation nozzle (21),
and in that in an axial half section of the front part for a turbomachine, at a location of the fan corresponding to 90% of the height of the trailing edge of the fan blades (62) starting from their base, the axial length (Lᵢₙₜ) separating the trailing edge of the fan blades (62) and the leading edge of the outlet guide vanes (42), being at least 1.5 times greater than the axial length (L'_{fan}) of the fan blades,
**characterized in that** said fan is a single fan and the front part of the turbomachine has a bypass ratio higher or equal to 5.

2. A front part of a turbomachine according to claim 1, **characterized in that** said gear box (20) is entirely upstream of the separation nozzle (21).

3. A front part of a turbomachine according to claim 1 or claim 2, **characterized in that** said angle (A) is less than 20°.

4. A front part of a turbomachine according to any one of the preceding claims, **characterized in that** said engine mount (51) is configured to recover the vertical forces, and preferably also the transverse forces.

5. A front part of an aircraft turbine engine according to any one of the preceding claims, **characterized in that** the gear box (20) comprises a gear train, preferably epicyclic or planetary.

6. A front part of an aircraft turbine engine according to the preceding claim, **characterized in that** the gear box (20) comprises a ring (54) fixed to the bearing support member (70).

7. A front part of an aircraft turbine engine according to claim 5 or claim 6, **characterized in that** the gear box (20) comprises a planet carrier (58) integral in rotation with said fan hub (60) and lying in the axial extension thereof, said turbomachine front portion comprising a rolling bearing (74b) for recovering the axial forces of the fan, said rolling bearing (74b) being supported by an additional bearing support member (71) connecting to the bearing support member (70).

8. A front part of an aircraft turbine engine according to any one of the preceding claims, **characterized in that** it comprises a low pressure shaft (11), and **in that** said structure (40) carries internally at least one stator structural element (50) connecting the structure (40) to an element (82) for supporting the rolling bearing (84) guiding said low pressure shaft (11).

9. A front part of an aircraft turbine engine according to Claims 7 and 8 in combination, **characterized in that** said gear box (20) is arranged axially between said rolling bearings (74a, 74b) guiding said fan (15) and said rolling bearing (84) guiding said shaft (11).

10. An aircraft turbofan turbomachine (1), comprising a front portion according to any one of the preceding claims, the turbomachine being preferably a single fan (15) turbojet (1).
